# FASCICULE DE BREVET EUROPEEN

(11) **EP 3 325 795 B1**
(45) Date de publication et mention de la délivrance du brevet: **30.12.2020**
(21) Numéro de dépôt: 16745803.3
(22) Date de dépôt: 15.07.2016
(51) Int. Cl.: F02K 9/80, F02K 9/86

(54) **DISPOSITIF DE MODULATION DE SECTION D'ÉJECTION DE GAZ**
VORRICHTUNG ZUR ABÄNDERUNG EINES GASAUSSTOSSABSCHNITTS
DEVICE FOR MODIFYING GAS EJECTION SECTION

(30) Priorité: 17.07.2015 FR 1501529
(43) Date de publication de la demande: 30.05.2018
(73) Titulaire: ArianeGroup SAS, 75015 Paris (FR)
(72) Inventeur: CAUBET, Pascal, 33160 Saint Medard en Jalles (FR); LARRIEU, Jean-Michel, 33185 Le Haillan (FR)
(74) Mandataire: Cabinet Beau de Loménie
(86) Numéro de dépôt international: PCT/FR2016/051823
(87) Numéro de publication internationale: WO 2017/013341

(56) Documents cités:
- EP-A1- 2 143 927
- WO-A1-2014/135786
- WO-A1-2016/097602
- US-A1- 2013 298 523
- US-B1- 6 629 416

## Description

### Arrière-plan de l'invention

La présente invention se rapporte au domaine général des propulseurs ou moteurs-fusées destinés à délivrer une poussée pour le pilotage d'engins tels que des missiles, des lanceurs ou encore des satellites, en utilisant le principe de propulsion par réaction ou par éjection de gaz. Elle vise plus précisément, mais non exclusivement, les tuyères équipant des propulseurs à propergol solide.

Un propulseur à propergol solide est principalement constitué d'une enveloppe renfermant un bloc de propergol, d'un allumeur et d'une tuyère à divergent fixe. Le bloc de propergol est percé par un canal situé dans l'axe du propulseur qui sert de chambre de combustion. L'allumeur met le feu au propergol à une extrémité de l'enveloppe et la combustion du propergol se propage de l'avant vers l'arrière du propulseur. Le propergol brûle à une vitesse prédéfinie en produisant des gaz de combustion qui sont expulsés par la tuyère.

La section de col de la tuyère permet de réguler la combustion du bloc de propergol de manière à maintenir la pression souhaitée dans la chambre de combustion tout en produisant la poussée attendue. Aussi, dans le cas d'un propulseur délivrant une poussée à débit unique, la section de col de la tuyère est unique et prédéterminée en fonction du niveau de poussée souhaité.

Cependant, le recours à une section de col unique n'est pas adapté à un propulseur ayant deux régimes de fonctionnement, typiquement un fonctionnement à haut débit (accélération) et un fonctionnement à bas débit (croisière) ou à un propulseur destiné à voler à des altitudes variables.

Pour pallier un tel inconvénient, une solution connue consiste à doter le lanceur de deux propulseurs distincts : un pour la phase d'accélération (« boost ») et un autre pour la phase de croisière. Cependant, une telle solution a comme inconvénient d'augmenter significativement le coût du lanceur.

Il est également connu de munir une tuyère d'une section de col variable. En pratique, un pointeau mobile en translation est logé à l'intérieur de la tuyère. La position de ce pointeau dans l'écoulement des gaz de combustion permet de déterminer la section de passage des gaz qui sortent de la tuyère et ainsi d'ajuster la section d'éjection des gaz au régime de fonctionnement du propulseur. Des dispositifs utilisant un pointeau mobile sont notamment divulgués dans les documents US 6 629 416 et WO 2016/097602.

Cependant, si l'utilisation d'un pointeau offre une solution économique qui permet d'obtenir plusieurs régimes de fonctionnement dans une même tuyère, les rendements de poussée ne sont pas optimisés pour ces différents régimes de fonctionnement.

### Objet et résumé de l'invention

L'invention a, par conséquent, pour but de proposer une solution économique de modulation de la section d'éjection des gaz tout en optimisant les rendements de poussée pour les différents régimes de fonctionnement.

A cet effet, selon l'invention, il est proposé un dispositif de modulation de section d'éjection de gaz destiné à être placé dans une tuyère en amont du col de ladite tuyère, le dispositif de modulation comprenant un guide de commande ainsi qu'un pointeau comportant une partie proximale reliée au guide de commande et une partie distale en forme de pièce de révolution et comportant une portion renflée, le pointeau étant mobile entre une position rétractée et une position avancée,
caractérisé en ce que le pointeau présente dans sa partie distale une première section de forme concave située en aval de la portion renflée et une deuxième section de forme concave située en aval de la première section.

Le pointeau du dispositif de modulation de section d'éjection de gaz de la présente invention présente dans sa partie distale un double profil permettant d'optimiser les rendements suivant la position du pointeau par rapport au col de tuyère. En effet, que ce soit dans la position rétractée ou avancée, le pointeau présente toujours une section de forme concave au niveau du col de tuyère qui joue le rôle de rampe de détente pour les gaz éjectés par la tuyère. Les rendements de poussée sont donc optimisés pour les différents régimes de fonctionnements qui sont déterminés par la position du pointeau par rapport au col de tuyère.

Selon une première caractéristique de l'invention, la deuxième section présente un diamètre inférieur au diamètre de la première section.

Selon une deuxième caractéristique de l'invention, le guide de commande comprend un logement interne dans lequel la partie proximale du pointeau est présente, la partie proximale dudit pointeau étant apte à coulisser dans le logement interne du guide de commande entre une première position dans laquelle la partie proximale du pointeau est présente dans une partie amont du logement interne et une deuxième position dans laquelle la partie proximale est présente dans une partie aval du logement interne, la partie proximale du pointeau étant maintenue dans la première position par au moins un élément de retenue apte à se rompre sous l'effet de la chaleur ou d'un effort mécanique déterminé.

Le dispositif de modulation de section d'éjection de gaz de l'invention propose une solution simple, à faible coût et peu encombrante permettant de définir deux modes de fonctionnement pour une tuyère, à savoir un premier mode de fonctionnement à haut débit dans lequel l'organe d'obturation partiel est en retrait axial par rapport au col de la tuyère et un second mode de fonctionnement à bas débit dans lequel l'organe d'obturation partiel est plus avancé axialement par rapport au col. Le passage du premier mode de fonctionnement au deuxième mode de fonctionnement est réalisé par rupture du ou des éléments de retenue. L'utilisation d'un ou plusieurs éléments de retenue sécables ou fusibles en combinaison avec un pointeau et un guide de pointeau permet de définir une architecture économique, simple et fiable pour des tuyères à variation de section de col, et ce sans augmenter significativement la masse et l'encombrement du propulseur.

En outre, le dispositif de modulation de section d'éjection de gaz de l'invention permet de s'affranchir de l'utilisation de deux propulseurs distincts (un propulseur pour la phase d'accélération (« boost ») et un autre propulseur pour la phase de croisière) et, par conséquent, de proposer à faible coût un système de propulsion permettant deux régimes de fonctionnement.

Selon un aspect du dispositif de modulation de section d'éjection de gaz de l'invention, le ou les éléments de retenue sont en un matériau apte à se rompre à partir d'une température déterminée.

Selon un autre aspect du dispositif de modulation de section d'éjection de gaz de l'invention, le dispositif de modulation comprend au moins un générateur de gaz apte à introduire du gaz entre le fond amont du logement interne et l'extrémité de la partie proximale du pointeau de manière à rompre le ou les éléments de retenue et à faire coulisser l'extrémité amont du pointeau vers la partie aval du logement interne.

L'invention a également pour objet une tuyère à section de col variable comprenant un col de tuyère caractérisée en ce qu'elle comprend en outre un dispositif de modulation de section d'éjection de gaz selon l'invention, ledit dispositif de modulation étant placé dans la tuyère en amont dudit col de tuyère.

Selon une caractéristique particulière de la tuyère de l'invention, celle-ci est de type aerospike, c'est-à-dire une tuyère fonctionnant sans divergent, ce qui diminue à la fois le coût, la masse et l'encombrement du propulseur tout en permettant d'optimiser la poussée de l'engin quelle que soit l'altitude de fonctionnement.

L'invention a encore pour objet un propulseur comprenant une tuyère à section de col variable selon l'invention.

Selon une caractéristique particulière du propulseur de l'invention, celui-ci comprend une enveloppe renfermant un chargement de propergol, la tuyère à section de col variable étant reliée au fond arrière de ladite enveloppe par une rallonge ou une liaison articulée.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- les figures 1A et 1B sont des vues schématiques en perspective et en coupe partielle d'un propulseur équipé d'une tuyère aerospike intégrant un dispositif de modulation de section d'éjection de gaz conformément à un mode de réalisation de l'invention ;
- les figures 2A et 2B sont des vues schématiques en coupe longitudinale de la tuyère des figures 1A et 1B.

### Description détaillée de l'invention

Le dispositif de modulation de section d'éjection de gaz de l'invention peut être utilisé avec tout type de tuyère, en particulier avec des tuyères comportant un divergent ou non.

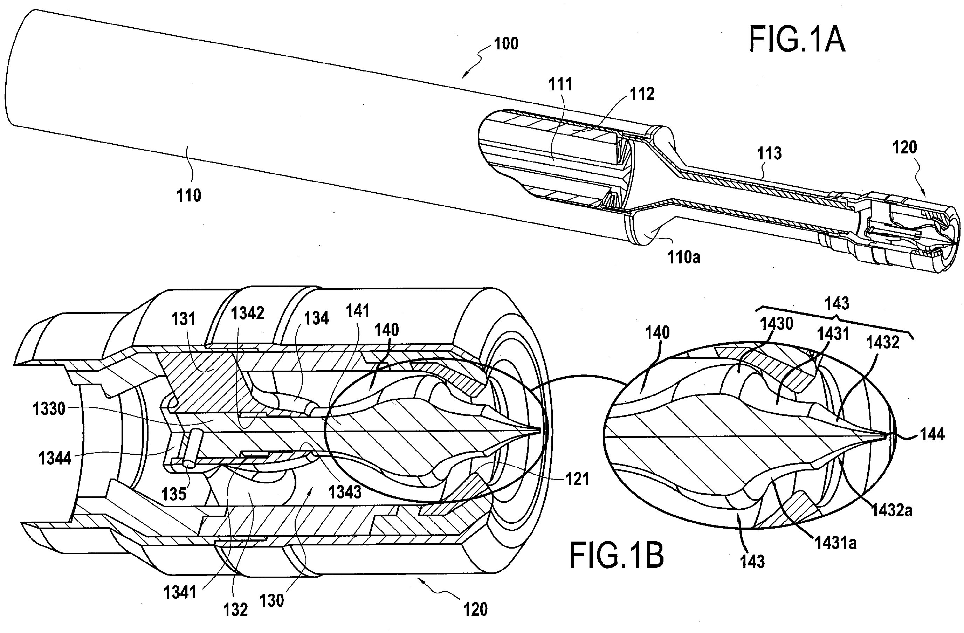

La figure 1A illustre schématiquement en coupe longitudinale la partie arrière d'un propulseur 100 comprenant une enveloppe 110 de révolution entourant une chambre de combustion 111 dans laquelle est logé un bloc de propergol solide 112. La chambre 111 s'ouvre à travers le fond arrière 110a de l'enveloppe 110 en amont d'une tuyère 120 de type « aerospike ». Par tuyère « aerospike », on entend ici une tuyère pratiquement dépourvue de divergent et qui comprend un pointeau à profil concave pouvant émerger au niveau de son col. Dans le mode de réalisation décrit ici, la tuyère 120 est reliée au fond arrière 110a par une rallonge 113. Toutefois, selon une variante de réalisation d'un propulseur selon l'invention, la tuyère 120 peut être également directement connectée au fond arrière de l'enveloppe du propulseur, c'est-à-dire sans la rallonge 113. Selon encore une autre variante de réalisation du propulseur selon l'invention, la tuyère peut être reliée au fond arrière de l'enveloppe du propulseur par une liaison articulée, telle qu'une rotule par exemple, de manière à permettre l'orientation de la tuyère dans plusieurs directions par rapport à l'axe de l'enveloppe du propulseur.

Conformément à l'invention, un dispositif de modulation de section d'éjection de gaz 130 est disposé à l'intérieur de la tuyère 120 de la tuyère 120 (figure 1B). Dans l'exemple décrit ici, le maintien en position du dispositif de modulation 130 est assuré par deux bras 131 et 132 fixés sur la paroi interne de la tuyère 120. Les bras 131 et 132 sont disposés à 180° l'un de l'autre, le reste de l'espace circonférentielle présent autour du dispositif de modulation étant laissé libre pour permettre aux gaz issus de la chambre de combustion 111 de s'écouler vers le col de tuyère 121.

Le dispositif de modulation de section d'éjection de gaz 130 comprend un pointeau 140 comprenant une tige 141 s'étendant entre une partie proximale 142 et une partie distale 143, ladite partie distale 143 ayant un diamètre décroissant formant un organe d'obturation partiel pour le col de tuyère 121. Le dispositif de modulation 130 comprend également un guide de commande 134 comprenant une paroi 1342 délimitant un logement interne 1341 dans lequel la partie proximale 142 du pointeau 140 est présente. Le guide de pointeau 134 comprend en outre un passage 1343 supportant la tige 141 du pointeau et guidant ses mouvements.

Conformément à l'invention et comme illustré sur la figure 1B, la partie distale 143 du pointeau 140 présente une forme de révolution et comporte successivement une portion renflée 1430, une première section 1431 située en aval de la portion renflée et une deuxième section 1432 située en aval de la première section. La première section 1431 présente une surface concave 1431a entre la portion renflée 1430 et la deuxième section 1432. La deuxième section 1432 présente également une surface concave 1432a entre la première section 1431 et l'extrémité libre 144 du pointeau. La deuxième section 1432 présente un diamètre inférieur au diamètre de la première section 1431. Les diamètres des première et deuxième sections 1431 et 1432 étant décroissants d'amont en aval de manière à conférer à chacune de ces sections une forme concave, on entend par « diamètre de la deuxième section inférieur au diamètre de la première section », le fait que la deuxième section 1432 présente sur toute sa surface concave 1432a un diamètre inférieure au plus petit diamètre de la première section 1431.

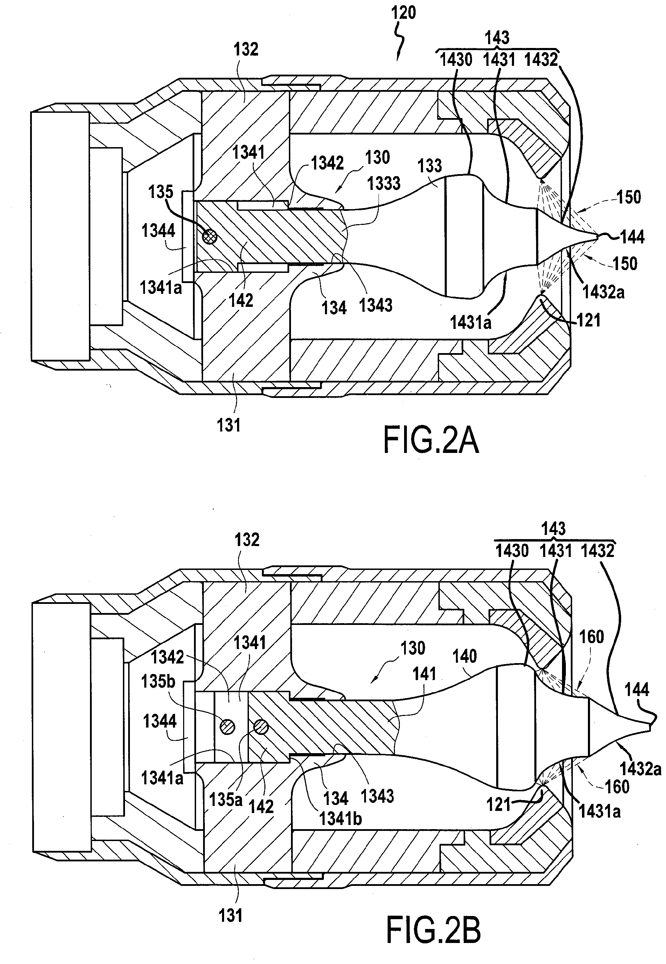

Le pointeau 140 est mobile entre une position rétractée représentée sur la figure 2A et une position avancée représentée sur la figure 2B. Durant la première phase de vol du propulseur, dite phase d'accélération, le dispositif de modulation de section d'éjection de gaz 130 se trouve dans la configuration représentée sur la figure 2A, configuration dans laquelle le pointeau 140 est dans la position rétractée. Dans la position rétractée, la deuxième section 1432 est positionnée en regard du col de tuyère 121. La présence de la surface concave 1432a de la deuxième section 1432 au niveau du col de tuyère 121 permet de créer un faisceau de détente 150 des gaz éjectés par la tuyère. Le faisceau de détente apparaissant à la sortie du col 121 et, par conséquent, à la sortie de la tuyère 120, les rendements de poussée sont optimisés pour ce régime de fonctionnement de la tuyère.

Durant la première phase de vol du propulseur, dite phase d'accélération, le dispositif de modulation de section d'éjection de gaz 130 se trouve dans la configuration représentée sur la figure 2A, configuration dans laquelle le pointeau 140 est dans la position rétractée. Dans la position rétractée, la deuxième section 1432 est positionnée en regard du col de tuyère 121. La présence de la surface concave 1432a de la deuxième section 1432 au niveau du col de tuyère 121 permet de créer un premier faisceau de détente 150 des gaz éjectés par la tuyère. Le faisceau de détente apparaissant à la sortie du col 121 et, par conséquent, à la sortie de la tuyère 120, les rendements de poussée sont optimisés pour ce régime de fonctionnement de la tuyère.

Durant la deuxième phase de vol du propulseur, dite phase de croisière, le dispositif de modulation de section d'éjection de gaz 130 se trouve dans la configuration représentée sur la figure 2B, configuration dans laquelle le pointeau 140 est dans la position avancée. Dans la position avancée, la première section 1431 est positionnée en regard du col de tuyère 121. La présence de la surface concave 1431a de la première section 1431 au niveau du col de tuyère 121 permet de créer un deuxième faisceau de détente 160 des gaz éjectés par la tuyère. Le faisceau de détente apparaissant à la sortie du col 121 et, par conséquent, à la sortie de la tuyère 120, les rendements de poussée sont optimisés pour ce régime de fonctionnement de la tuyère.

Comme illustré sur les figures 2A et 2B, la partie proximale 142 du pointeau 140 peut coulisser dans le logement interne 1341 du guide de commande 134 entre une première position, correspondant à la position rétractée du pointeau 140 décrite ci-avant, dans laquelle ladite partie proximale 142 du pointeau 140 est présente dans une partie amont 1341a du logement interne 1341 (figure 2A) et une deuxième position, correspondant à la position avancée du pointeau 140, dans laquelle la partie proximale 142 est présente dans une partie aval 1341b du logement interne 1341 (figure 2B).

Dans le mode de réalisation décrit ici, la partie proximale 142 du pointeau 140 est maintenue dans la première position par un élément de retenue, ici une goupille 135 qui traverse à la fois la partie proximale 142 du pointeau et la paroi 1342 du guide de pointeau 134. Dans le mode de réalisation décrit ici, la goupille 135 est réalisée en un matériau apte à céder, par fusion ou ramollissement, à partir d'une température déterminée. A titre d'exemples :
- pour une température de libération du pointeau déterminée autour de 85°C, la goupille 135 peut notamment être réalisée en ABS (Acrylonitrile Butadiène Styrène),
- pour une température de libération du pointeau déterminée autour de 400°C, la goupille 135 peut notamment être réalisée en aluminium,
- pour une température de libération du pointeau déterminée supérieure à 800°C, la goupille 135 peut notamment être réalisée en un alliage métallique à mémoire de forme.

Les alliages à mémoire de forme peuvent être utilisés d'une manière générale pour réaliser le ou les éléments de retenue du dispositif de l'invention, leur composition étant déterminée en fonction de la température de libération du pointeau visée.

Durant la première phase de vol du propulseur, dite phase d'accélération, le dispositif de modulation de section d'éjection de gaz 130 se trouve dans la configuration représentée sur la figure 2A. Lors de cette première phase de vol, les gaz de combustion circulant dans la tuyère 120 vont transmettre de la chaleur à la goupille 135. Une fois la température de rupture de la goupille 135 atteinte (température de fusion ou de ramolissement), celle-ci perd son intégrité mécanique et ne joue plus son rôle d'élément de retenue de la partie proximale 142 du pointeau 140 qui, sous l'effet d'aspiration des efforts de pression générés dans la tuyère, se déplace (translation) dans la position illustrée sur la figure 2B. Une première partie 135a de la goupille 135 reste alors dans la partie proximale 142 du pointeau tandis qu'une deuxième partie 135b reste dans la paroi 1342 du guide de pointeau.

Dans le mode de réalisation décrit ici, la partie amont 1341a du logement interne 1341 est fermée par un bouchon 1344 réalisé en un matériau dont la conductivité thermique permet de retarder la transmission de la chaleur des gaz à la goupille et, par conséquent, l'instant auquel la goupille se rompt. Le bouchon peut être notamment réalisé en matériau composite carbone/carbone (C/C) comprenant une texture de renfort en fibres de carbone densifiée par une matrice de carbone pyrolytique (pyrocarbone), en matériau composite à matrice céramique basse densité (CMC) comprenant une texture de renfort en fibres réfractaires (carbone ou céramique) densifiée par une matrice au moins partiellement céramique ou en matériau composite à matrice organique (CMO) comprenant une texture de renfort en fibres réfractaires (carbone ou céramique) densifiée par une matrice organique (résine). Toutefois, le dispositif de modulation peut également être utilisé sans fermeture de la partie amont 1341a du logement interne 1341.

Selon d'autres modes de réalisation, la goupille qui traverse à la fois la partie proximale du pointeau et la paroi du guide de pointeau ne cède plus sous l'effet de la chaleur mais d'un effort mécanique exercé sur l'extrémité amont du pointeau. Dans ce cas, le dispositif de modulation de section d'éjection de gaz comprend en outre un générateur de gaz, par exemple une cartouche pyrotechnique logée dans un bras du dispositif de modulation ou une vanne reliée à un conduit qui débouche dans une partie du propulseur où une fraction des gaz de combustion peut être prélevée comme par exemple dans la chambre de combustion.

Le générateur de gaz est apte à envoyer sur commande un gaz sous pression dans la partie amont du logement interne entre le fond dudit logement interne et l'extrémité de la partie proximale du pointeau de manière à rompre la goupille et à faire coulisser l'extrémité amont du pointeau vers la partie aval du logement interne. La goupille est dans ce cas dimensionnée de manière à rompre sous l'effort de pression exercé par le gaz envoyé. La goupille peut être notamment réalisée en aluminium ou en acier.

Dans les modes de réalisation décrits ci-avant, l'élément de retenue est constitué par une goupille. Toutefois, la réalisation de l'élément de retenue dans la présente invention n'est pas limitée à une goupille et peut présenter une forme et/ou une structure différente. Selon une variante de réalisation, le pointeau peut comporter sur sa partie proximale des clavettes formant des éléments de retenue. Dans ce cas, le logement interne du guide de pointeau du dispositif de modulation de section d'éjection de gaz comprend une partie amont apte à loger la partie proximale du pointeau avec ses clavettes et une partie aval présentant des dimensions réduites par rapport à la partie amont de manière à définir une butée. Ainsi, lors de la première phase de vol, le pointeau est maintenu dans la position rétractée. Une fois la première phase de vol terminée, les clavettes sont rompues, soit par la chaleur, soit par un effort de pression comme déjà décrit ci-avant afin de permettre le déplacement du pointeau dans la position avancée comme décrit ci-avant

Le dispositif de modulation de section d'éjection de gaz de l'invention peut être utilisé dans des propulseurs, moteurs-fusées ou lanceurs à propulsion solide (propergol solide), liquide (propergol liquide) ou hybride (propergols solide et liquide).

## Revendications

1. Dispositif de modulation de section d'éjection de gaz (130) destiné à être placé dans une tuyère (120) en amont du col (121) de ladite tuyère, le dispositif de modulation comprenant un guide de commande (134) ainsi qu'un pointeau (140) comportant une partie proximale (142) reliée au guide de commande (134) et une partie distale (143) en forme de pièce de révolution et comportant une portion renflée (1430), le pointeau (140) étant mobile entre une position rétractée et une position avancée,
**caractérisé en ce que** le pointeau (140) présente dans sa partie distale (143) une première section de forme concave (1431) située en aval de la portion renflée et une deuxième section de forme concave (1432) située en aval de la première section.

2. Dispositif selon la revendication 1, **caractérisé en ce que** la deuxième section présente un diamètre inférieur au diamètre de la première section.

3. Dispositif selon la revendication 1 ou 2, **caractérisé en ce que** le guide de commande (134) comprend un logement interne (1341) dans lequel la partie proximale (142) du pointeau (140) est présente, la partie proximale (142) dudit pointeau étant apte à coulisser dans le logement interne (1341) du guide de commande (132) entre une première position dans laquelle ladite partie proximale du pointeau est présente dans une partie amont (1341a) du logement interne (1341) et une deuxième position dans laquelle ladite partie proximale est présente dans une partie aval (1341b) du logement interne (1341), la partie proximale (142) dudit pointeau (140) étant maintenue dans la première position par au moins un élément de retenue (135) apte à se rompre sous l'effet de la chaleur ou d'un effort mécanique déterminé.

4. Dispositif selon la revendication 3, **caractérisé en ce que** le ou les éléments de retenue (135) sont en un matériau apte à se rompre à partir d'une température déterminée.

5. Dispositif selon la revendication 3, **caractérisé en ce que** le dispositif de modulation comprend au moins un générateur de gaz apte à introduire du gaz entre le fond amont du logement interne (1341) et l'extrémité de la partie proximale (142) du pointeau (140) de manière à rompre le ou les éléments de retenue (135) et à faire coulisser l'extrémité amont du pointeau (140) vers la partie aval (1341b) du logement interne (1341).

6. Tuyère (120) à section de col variable comprenant un col de tuyère (121) **caractérisée en ce qu'**elle comprend en outre un dispositif de modulation de section d'éjection de gaz (130) selon l'une quelconque des revendications 1 à 5, ledit dispositif de modulation étant placé dans la tuyère en amont dudit col de tuyère.

7. Tuyère selon la revendication 6, **caractérisée en ce qu'**elle est de type aerospike.

8. Propulseur comprenant une tuyère à section de col variable selon la revendication 7.

9. Propulseur (100) selon la revendication 8, **caractérisé en ce qu'**il comprend une enveloppe (110) renfermant un chargement de propergol (112), la tuyère (120) à section de col variable étant reliée au fond arrière (110a) de ladite enveloppe (110) par une rallonge (113) ou une liaison articulée.

## Patentansprüche

1. Vorrichtung zur Abänderung eines Gasausstoßabschnitts (130), die bestimmt ist, in einer Düse (120) dem Kragen (121) der Düse vorgelagert platziert zu sein, wobei die Abänderungsvorrichtung eine Steuerführung (134) sowie eine Nadel (140) umfasst, aufweisend einen proximalen Teil (142), der mit der Steuerführung (134) verbunden ist, und einen distalen Teil (143) in Form eines Drehteils und aufweisend einen bauchigen Abschnitt (1430), wobei die Nadel (140) zwischen einer eingezogenen Position und einer vorgeschobenen Position beweglich ist,
**dadurch gekennzeichnet, dass** die Nadel (140) in ihrem distalen Teil (143) einen ersten Querschnitt konkaver Form (1431) aufweist, der sich dem bauchigen Abschnitt nachgelagert befindet, und einen zweiten Querschnitt konkaver Form (1432), der sich dem ersten Querschnitt nachgelagert befindet.

2. Vorrichtung nach Anspruch 1, **dadurch gekennzeichnet, dass** der zweite Querschnitt einen kleineren Durchmesser als der erste Querschnitt aufweist.

3. Vorrichtung nach Anspruch 1 oder 2, **dadurch gekennzeichnet, dass** die Steuerführung (134) eine innere Aufnahme (1341) umfasst, in welcher der proximale Teil (142) der Nadel (140) vorhanden ist, wobei der proximale Teil (142) der Nadel imstande ist, in der innere Aufnahme (1341) der Steuerführung (132) zwischen einer ersten Position, in welcher der proximale Teil der Nadel in einem vorgelagerten Teil (1341a) der innere Aufnahme (1341) vorhanden ist, und einer zweite Position, in welcher der proximale Teil in einem nachgelagerten Teil (1341b) der inneren Aufnahme (1341) vorhanden ist, zu gleiten, wobei der proximale Teil (142) der Nadel (140) in der ersten Position von mindestens einem Halteelement (135) gehalten wird, das imstande ist, unter der Wirkung von Wärme oder einer bestimmten mechanischen Kraft zu brechen.

4. Vorrichtung nach Anspruch 3, **dadurch gekennzeichnet, dass** das oder die Halteelemente (135) aus einem Material sind, das imstande ist, ab einer bestimmten Temperatur zu brechen.

5. Vorrichtung nach Anspruch 3, **dadurch gekennzeichnet, dass** die Abänderungsvorrichtung mindestens einen Gaserzeuger umfasst, der imstande ist, Gas zwischen dem vorgelagerten Boden der inneren Aufnahme (1341) und dem Ende des proximalen Teils (142) der Nadel (140) derart einzuleiten, dass das oder die Halteelemente (135) brechen und das vorgelagerte Ende der Nadel (140) zum nachgelagerten Teil (1341b) der inneren Aufnahme (1341) bewegt wird.

6. Düse (120) mit variablem Kragenquerschnitt, umfassend einen Düsenkragen (121), **dadurch gekennzeichnet, dass** sie ferner eine Vorrichtung zur Abänderung eines Gasausstoßabschnitts (130) nach einem der Ansprüche 1 bis 5 umfasst, wobei die Abänderungsvorrichtung dem Düsenkragen vorgelagert in der Düse platziert ist.

7. Düse nach Anspruch 6, **dadurch gekennzeichnet, dass** sie vom Typ Aerospike ist.

8. Triebwerk, umfassend eine Düse mit variablem Kragenquerschnitt nach Anspruch 7.

9. Triebwerk (100) nach Anspruch 8, **dadurch gekennzeichnet, dass** es einen Mantel (110) umfasst, der eine Propergolladung (112) einschließt, wobei die Düse (120) mit variablem Kragenquerschnitt mit dem hinteren Boden (110a) des Mantels (110) durch eine Verlängerung (113) oder eine Gelenkverbindung verbunden ist.

## Claims

1. A modulator device for modulating a gas ejection section (130), which device is for placing in a nozzle (120) upstream from the throat (121) of said nozzle, the modulator device comprising both a plunger (140) having a proximal portion (142) connected to a control guide (134) and also a distal portion (143) in the form of a body of revolution, the plunger (140) being movable between a retracted position and an extended position;
• the device **characterized in that** the plunger (140) presents, in its distal portion (143), a first section of concave shape (1431) and a second section of concave shape (1432) situated downstream from the first section.

2. A device according to claim 1, **characterized in that** the second section presents a diameter that is smaller than the diameter of the first section.

3. A device according to claim 1 or claim 2, **characterized in that** the control guide (134) includes an internal housing (1341) in which the proximal portion (142) of the plunger (140) is present, the proximal portion (142) of said plunger being suitable for sliding in the internal housing (1341) of the control guide (132) between a first position in which said proximal portion of the plunger is present in an upstream portion (1341a) of the internal housing (1341), and a second position in which said proximal portion is present in a downstream portion (1341b) of the internal housing (1341), the proximal portion (142) of said plunger (140) being held in the first position by at least one retaining element (135) suitable for breaking under the effect of heat or under the effect of a determined mechanical force.

4. A device according to claim 3, **characterized in that** the retaining element(s) (135) is/are made of material suitable for breaking from a determined temperature.

5. A device according to claim 1, **characterized in that** the modulator device includes at least one gas generator suitable for introducing gas between the upstream end of the internal housing (1341) and the end of the proximal portion (142) of the plunger (140) so as to break the retaining element(s) (135) and cause the upstream end of the plunger (140) to slide towards the downstream portion (1341b) of the internal housing (1341).

6. A nozzle (120) of variable throat section including a nozzle throat (121) **characterized in that** it further includes a modulator device for modulating a gas ejection section (130) according to any one of claims 1 to 5, said modulator device being placed in the nozzle upstream from said nozzle throat.

7. A nozzle according to claim 6, **characterized in that** it is of the aerospike type.

8. A thruster including a nozzle of variable throat section according to claim 7.

9. A thruster (100) according to claim 8, **characterized in that** it comprises a casing (110) containing a propellant charge (112), the nozzle (120) of variable throat section being connected to the rear end (110a) of said casing (110) by an extender (113) or by a hinged connection.
